# EUROPEAN PATENT SPECIFICATION

(11) **EP 0 568 615 B1**
(45) Date of publication and mention of the grant of the patent: **10.09.1997**
(21) Application number: 92904638.1
(22) Date of filing: 24.01.1992
(51) Int. Cl.: B29C 69/02

(54) **PROCESS FOR FORMING A LAMINATED BODY**
VERFAHREN ZUR HERSTELLUNG EINES SCHICHTKÖRPERS
PROCEDE DE FORMATION D'UN CORPS STRATIFIE

(30) Priority: 24.01.1991 NL 9100114
(43) Date of publication of application: 10.11.1993
(73) Proprietor: DSM N.V., 6411 TE Heerlen (NL)
(72) Inventor: SMITH, Bryan, Cecil, NL-6241 ES Meerssen (NL); GASSE VAN, René, Leopold, Eduard, B-3660 Opglabbeek (BE); RIECK, Frank, Gerard, NL-2343 GX OEGSTGEEST (ZH) (NL); WAAIJER, Johanna, Elisabeth, NL-2011 LK HAARLEM (NL)
(86) International application number: NL9200016
(87) International publication number: WO9212850

(56) References cited:
- EP-A- 0 186 015
- WO-A-90/03256
- FR-A- 2 094 092
- US-A- 2 797 179
- PATENT ABSTRACTS OF JAPAN vol. 012, no. 137 (M-690)26 April 1988 & JP,A,62 259 820 (TOYOTA TEKKO KK ET AL) 12 November 1987 see abstract; figures
- PATENT ABSTRACTS OF JAPAN vol. 012, no. 121 (M-686)15 April 1988 & JP,A,62 248 611 (MEIWA SANGYO KK) 19 October 1987 see abstract; figures

## Description

The present invention relates to a process for forming a laminated body, by introducing a foil into a mold, clamping the edges of said foil between a clamping device and part of the mold, introducing a compound into the mold, deep-draw said foil fully or partly with vacuum before, during or after the compound is introduced and before the mold is completely closed, and closing said mold.

WO-A-9003256 describes such a process for a thermoplastic fiber reinforced compound. In WO-A-9003256 a process is described for obtaining a structure by first vacuum thermoforming a thermoplastic foil, functioning as decorative skin, followed by compression molding (cold stamping) of a fiber reinforced thermoplastic sheet on top of the thermoformed foil. The whole process is carried out in a mold at about room temperature.

Parts made with thermosettable compounds often contain surface defects. For instance they can contain pinholes at the surface or their fibrous reinforcement can distort the surface. These defects remain visible after a part has been painted and it may therefore need to be reworked and/or repainted at extra cost.

It would be highly desirable to be able to apply the process as described in WO-A-9003256 to the compression molding of thermosettable compounds. The foil, being present on the outside of the formed body, would then determine the surface quality of the body and rework would no longer be necessary.

However the process as described above does not yield the desired effect when applied to thermosettable compounds. Thermosettable compounds are typically cured at temperatures in excess of 100°C. Moreover, compression moulding of thermosettable compounds is achieved with significant flow of the compound, leading to high molding stresses, which are also experienced by the foil. When applying the known process to thermosettable compounds therefore, the decorative foil will very easily wrinkle or even tear. It will therefore not be possible to obtain the desired high surface quality.

The process according to the invention offers a solution to exactly this problem.

The process according to the invention for forming a laminated body thereto comprises the steps of introducing a foil into a mold, clamping the edges of said foil between a clamping device and part of the mold, introducing a compound into the mold, deep-draw said foil fully or partly with vacuum before, during or after the compound is introduced and before the mold is completely closed, and closing said mold, whereby the mold is heated, said clamping device exerting a pressure on the foil high enough to deep-draw said foil without folding or creasing and low enough to prevent the foil from breaking during moulding, whereby the clamping device at least partially is provided with a low friction material, and whereby said laminated body is formed by flow of the compound, being thermosettable and said compound is cured.

With this procedure, the foil is fixed in such a way that, when the pressure is lowered by the application of vacuum, it can fully or partly assume the shape of the mold on the side at which the pressure is lowered, without tearing or wrinkling. The foil can to some extent flow between the said clamping device and the mold. Moreover uneven clamping forces on the foil are prevented.

The necessary clamping force can be calculated by one skilled in the art and depends a.o. on the type of foil, pressing conditions, mold design and clamping area, or it can be determined by routine experimentation.

A further advantage of the process of the invention is that the air is no longer present in the mold during the pressing, and therefore cannot be trapped in any ribs or other details provided in the mold surface. If air is trapped behind the foil in a rib then the presence of the foil will hinder the thermosettable compound from entering and/or filling the rib and then a defective part will be produced.

EP-B-0186015 is directed to a process for obtaining products with a decorative skin. Although EP-B-0186015 tries to solve the same problem as the process of the invention i.e. to obtain a smooth high quality surface, it relates to a different processing method wherein the decorative foil is not vacuum formed but simultaneously compression molded with the compound. Moreover it relates to other materials, i.e. to thermoplastics and elastomers.

The mold can be any mold suitable for use with a process according to the invention and can be built by a man skilled in the art when reading the description. A general description of a mold is given in EP-B-0,186,015, hereby incorporated by reference. The mold described in EP-B-0,186,015 should be adapted to make it possible to use vacuum under the foil and to cure a thermosettable compound by heating. Holes should be provided in the mould for this purpose and they should be connected to a vacuum pump. Care should be taken that these holes are as small as possible, so as not to disturb the surface of the laminated body produced. The reduced pressure should preferably be lower than 0.1 bar and more preferably lower than 0.01 bar.

Thermoplastic foils in laminates with thermosettable compounds are for example described in US-A-2,797,179, hereby incorporated by reference. US-A-2,797,179 does not describe deep-drawing.

The thermoplastic foil may be any foil that is able to withstand the pressing temperature of the moulding process and which gives the required outer surface to the part being produced. In a preferred embodiment the thermoplastic foil adheres well to the thermosettable moulding compound during the moulding process. This may occur if the foil itself adheres to the thermosettable compound or if the foil comprises a separate adhesive layer or if the thermosettable compound is modified in some way to adhere to the chosen foil.

It is also possible to apply such an adhesive layer to the foil after the foil is introduced into the mold. Preferably the foil comprises such an adhesive layer before introduction into the mold.

The foil can consist of a thermoplastic foil, or a metal foil or of some other foil. For some applications thermoplastic foils are preferred, such as e.g. for parts with complex surfaces where high elasticity in the foil is beneficial, parts for automotive or aerospace application where a high quality surface, which may be paintable, is required, or coloured parts or decorated parts where the thermoplastic foil forms the outer surface layer. A list of thermoplastics may for example be found in J.M. Charrier "Polymeric Materials and Processing", Hanser Publishers, Munich, 1991, Chapter 3 or in A.E. Schouten "Plastics", 8th Impression, Delta Press B.V., Overberg, The Netherlands, 1987, page 17, both publications incorporated by reference.

Preferred examples of foils usually requiring an adhesive layer are nylons such as nylon 6, nylon 12, nylon 4.6, polycarbonate, various polyesters such as polyethylene terephthalate, copolyesters and various acrylates such as polymethylmethacrylates. Examples of materials which adhere to the thermosettable compound are those containing a reactive group such as acid groups, anhydride groups, epoxy or hydroxy or mixtures thereof.

Prefered thermoplastic foils provide a smooth surface; they are deep-drawable; they adhere to the thermosettable compound; they do not stick to the mold; they are chemically and water resistant and paintable. They have a melting point Tm of at least 120°C, preferably at least 150°C and more preferably at least 180°C.

For other applications metal foils are preferred. Metal foils have as an advantage that they have good resistance to heat, chemicals, abrasion, wear etc. and that they conduct electricity and they are paintable. A metal foil will usually need an additional adhesive layer between it and the thermosettable compound, unless the compound itself contains a resin or resin component that provides adhesion.

The metal can be chosen, inter alia, from aluminum, tin, copper, zinc, steel or alloys or combinations of these.

The metal foil can be obtained by rolling to, for example, a thickness of 0.05 to 1 mm.

The metal preferably consists of aluminum or an alloy thereof or steel.
If the material of the foil sticks to the surface of the mold, it is possible to add an extra release foil or release agent to the process. This release foil can be laminated with the foil or can be added otherwise.

The adhesive layer can be applied to the foil in any desired manner, such as, for example, by means of spreading, spraying (either as a liquid, a paste or a powder) or extrusion onto the foil, or it can be applied as a loose film between foil and compound.

Preferably the adhesive layer is applied to the foil by coextrusion or spraying.

The adhesive layer can comprise any material or combination of materials that adhere to the foil and to the thermosettable compound. A preferred embodiment of the adhesive layer is the following:
A composition comprising
a) polyolefins which are 99.9-50 per cent by weight of the total composition,
b) ethylenically unsaturated esters which are 0-50 per cent by weight of the total composition,
c) at least one of polymerizable acyclic, cyclic and polycyclic ethylenically unsaturated acids or acid anhydrides which are 0.1-50 per cent by weight of the total composition.

The ethylenically unsaturated ester and the polymerizable acyclic, cyclic and polycyclic ethylenically unsaturated acids and acid anhydrides are preferably reacted with the polyolefin by means of grafting. The ethylenically unsaturated ester and at least one of polymerizable acyclic, cyclic and polycyclic ethylenically unsaturated acids or acid anhydrides are then covalently bonded.

The polyolefin can be chosen from at least one of homopolymers such as high-, medium- and low-density polyethylene, polypropylene, poly-1-butene and poly-4-methyl 1-pentene; or from copolymers consisting mainly of polyethylene and also other α-olefins, such as ethylene/propylene copolymers, ethylene 1-butene copolymers, ethylene 1-hexene copolymers, ethylene 4-methyl 1-pentene copolymers and ethylene 1-octene copolymers; or from polypropylene and also other α-olefins, such as propylene/ethylene block copolymers, ethylene/vinyl acetate copolymers, ethylene/acrylic acid copolymers and ethylene/ methacrylic acid copolymers; or from copolymers of ethylene with the methyl, ethyl, propyl, isopropyl or butyl esters of acrylic acid or methacrylic acid; or from ethylene/maleic acid copolymers, ethylene/propylene copolymer rubbers, ethylene/propylene/diene copolymer rubbers, liquid polybutadiene, ethylene/vinyl acetate/vinyl chloride copolymers, and mixtures thereof. These polymers can also be mixed with other types of plastics or rubbers.

The polyolefin is preferably polyethylene or polypropylene.

The ethylenically unsaturated acids and acid anhydrides can be chosen, for example, from at least one of maleic acid, oleic acid, crotonic acid, fumaric acid, acrylic acid, methacrylic acid, mesaconic acid, citraconic acid, itaconic acid, monoethyl maleate or diethyl maleate, acrylamide, methacrylamide, maleic acid monoamide, chloromaleic acid, tetrahydrophthalic acid, the anhydrides of these acids (if possible), x-methylbicyclo[2.2.1]hept-5-ene-2,3-dicarboxylic acid anhydride (XMNA) and bicyclo[2.2.1]hept-5-ene-2,3-dicarboxylic acid anhydride (NBDA).

A composition which can be used as said first embodiment of the adhesive layer is described, for example, in US-A-4,477,532 or US-A-3,882,194. Adhesives for use in a laminate according to the invention are commercially available under the trade names Orevac^{r}, Admer^{r}, Bynel^{r}, Novatec^{r} or Plexar^{r}. An adhesive with trademark Plexar^{r} is preferably used. Plexar^{r} is obtainable from DSM Polymers International, Sittard, The Netherlands.

A further preferred embodiment of the adhesive layer are adhesion promoting compounds such as epoxies, polyesters, acrylates, polyurethanes, phenolic compounds, compounds containing a reactive group, e.g. acid group, anhydride group, epoxy or hydroxy or mixtures thereof with, if necessary, catalysts, which is spread or sprayed as a liquid or powder onto the foil.

It is preferred that the adhesive layer be coextruded with a thermoplastic foil or prelaminated with either a metal or thermoplastic foil.

Other preferred embodiments of the adhesive layer are pressure sensitive adhesives and hot melt adhesives such as are known to those skilled in the art.

A further preferred embodiment of the adhesive layer is described in EP-A-0,297,396, hereby incorporated by reference. EP-A-0,297,396 describes a process for producing a laminated body, with use of an adhesive layer based on polyepoxy and unsaturated polyester and/or reaction products of these.

The thermosettable compound can be any thermosetting compound such as, for example, unsaturated polyester compounds, such as a so-called "sheet molding compound" (SMC), "bulk molding compound" (BMC), "dough molding compound" (DMC), epoxy molding compounds, amino systems, such as, e.g. melamineformaldehyde compounds (MFC), or any other form of molding compounds or combinations of these. Preferably the compound is an unsaturated polyester moulding compound or a MFC.

Molding compounds are compounds comprising thermosetting material, and a fibrous material and optionally fillers and other additives. Molding compounds can be produced via techniques known to those skilled in the art, such as, for example, blending, injection molding, prepregging, transfer molding, compression molding, pultrusion and combinations thereof.

The fibrous reinforcing material can consist of any material which is obtainable in fiber form, such as glass (optionally with a sizing), carbon, aramide, silicon carbide, aluminum oxide, asbestos, ceramic, graphite, metal, polyamides, polyacrylonitrile or natural fibers such as cotton, cellulose, flax, hemp or jute.

The fiber material is preferably glass, carbon or aramide.

The fibrous reinforcing material can be used in any desired form, such as woven or nonwoven fabrics, mats, short or long fibers, fiber bundles or monofilaments or combinations of these forms. It is preferably used in the form of randomly distributed fibers having a length of 1 µm to 10 cm.

The fibers generally form 10 to 60 wt.% of the compound as a whole and more specifically 30 to 50 wt.%.

Fillers that can be incorporated in the compound can be chosen from e.g. silicas and silicates, carbonates, sulfates, oxides, hydroxides, asbestos, talc, china clay (kaolin), silica (sand), diatomaccous earth and vulcaneous ash and other fillers known in the art. Preferably the filler is calcium carbonate or aluminiumtrihydroxide.

Further additives can be e.g. catalysts, pigments, inhibitors, thickening materials, such as e.g. MgO, lubricants, softeners, flexibilisers, release agents, anti-corrosion agents, etc.

The thermosettable resin can be cured under a pressure of 1 to 500 bar, preferably 1 to 250 bar, more preferably of 100 to 200 bar.

This curing of the thermosettable resin is preferably effected at a temperature of 40 to 200°C, more preferably from 90 to 190°C and most preferably from 110 to 170°C.

The press time is usually between 10 seconds and 1 hour, preferably from 15 seconds to 30 minutes and more preferably from 30 seconds to 10 minutes. For industrial application it can be advantageous to minimize the press time to as short a time as possible. The tensile strength of the laminate will generally increase somewhat with longer press times.

Compounds are describes e.g. by G. Lubin, in Handbook of Composites, Van Nostrand Reinhold Company, New York, 1982, Chapter 15, hereby incorporated by reference.

The laminate is processed to its cured state by pressing and supply of heat. The optimal curing conditions depend on the type of compound.

A cured laminated body according to the present invention generally has a thickness of at least 0.3 mm. The cured laminate preferably has a thickness of at least 0.8 mm and can have a thickness of up to a few decimeters, but usually has a thickness of no greater than a few centimeters. Most preferably, the laminate has a thickness of 1.5 to 10 mm.

So, eventually an adhesive layer is applied and an amount of compound is then applied. Normally the foil is applied on top of the female mold and the compound is applied on top of the foil. In the alternative, if the mold is devised with the female mold on top and the foil attached to it, the compound can be applied on top of the male mold. In a different alternative, the foil can be applied to the male mold, and then vacuum formed. This will result in a product with a foil on the inside. It is also possible to apply a foil to both mold parts and then to apply vacuum to both. In this way, a product with foil on both sides can be obtained. The mold is closed, the compound flowing into all corners of the mold. Pressure is exerted for some time and the temperature can be raised so that the resin is cured. The mold is then opened and the formed product is removed. If necessary excess foil can be removed by cutting or otherwise.

EP-A-0,170,819 describes pressing a plastic sheet onto a metal layer which is pressed in a die. An adhesive layer can also be used. This adhesive layer is not described in any more detail. EP-A-0,170,819 does not describe deep-drawing.

The introduction of an adhesive film between a metal layer and a fibrous reinforcing material impregnated with curable resin is described in DE-A-1,546,529. However, DE-A-1.546.529 does not describe deep-drawing.

EP-B-0,171,626 describes an adhesive film consisting of, inter alia, a polyolefin combined with an α,β-unsaturated acid. EP-B-0,171,626 further describes a film which adheres to a large group of materials, including metal and thermosetting resins, which optionally may also be filled with, inter alia, fibers. EP-B-0,171,626 is hereby incorporated by reference with respect to an adhesive layer for use with a process according to the invention. EP-B-0,171,626 does not describe deep-drawing.

Laminates produced according to the present invention can be used in various applications such as in automobiles, in particular for parts which have to be painted. Laminates can be made which are able to withstand the temperatures which are customary in a paint line in an automobile factory. A metal foil laminate produced according to the present invention also offers the possibility of electrostatic application.

An additional advantage of a process for producing a laminated body according to the present invention is that it is possible to produce a laminate in which the bond formed by the adhesive layer between the metal layer and the compound is reversible, so that the metal layer and the compound can be separated from one another and recycled separately. The bond is reversed by heating the laminated body to above the melting point of the adhesive layer and pulling the metal layer and the compound apart.

Furthermore, laminated bodies according to the present invention are applicable for use in, for example, aerospace components, dish aerials, decorative plates having a smooth and/or reflecting surface, or plastic parts which are not statically charged.

The present invention also relates to a two-part system, the first part of which consists of a foil with an adhesive layer and the second part of which consists of a compound.

The present invention also relates to a mold that can be used in a process according to the invention.

In a preferred embodiment, the raw materials for producing a laminated body according the present invention are usually produced and sold as such a two-part system.

For a better understanding of the invention and to show how the same can be carried into effect, reference will now be made to the accompanying schematic drawings of molds that can be used in a process according to the invention, in which:
Fig. 1 is a sectional view of an apparatus to be used with a process according to the invention, if a metal foil or a foil with low elasticity is used.
Fig. 2 is a sectional view of the apparatus of fig.1 with the foil partially deep-drawn with the use of vacuum and a thermosettable compound introduced into the mold.
Fig. 3 is a sectional view of the appartus of fig. 2, with the mold closed.
Fig. 4 is a sectional view of one of the closing edges of the mold as shown in fig. 3.
Fig. 5 is a sectional view of an apparatus to be used with a process according to the invention, if a thermoplastic foil is used or another foil with high elasticity.
Fig. 6 is a sectional view of the apparatus of fig. 5 with the foil substantially deep-drawn with the use of vacuum and a thermosettable compound introduced into the mold.
Fig. 7 is a sectional view of the apparatus of fig. 6, with the mold closed.
Fig. 8 is a sectional view of one of the closing edges of the mold as shown in figs. 5 to 7.
Fig. 9 a, b and c are sectional views of the molded parts.

Now the method according to the present invention will be described in more detail with reference to the drawings 1 to 9.

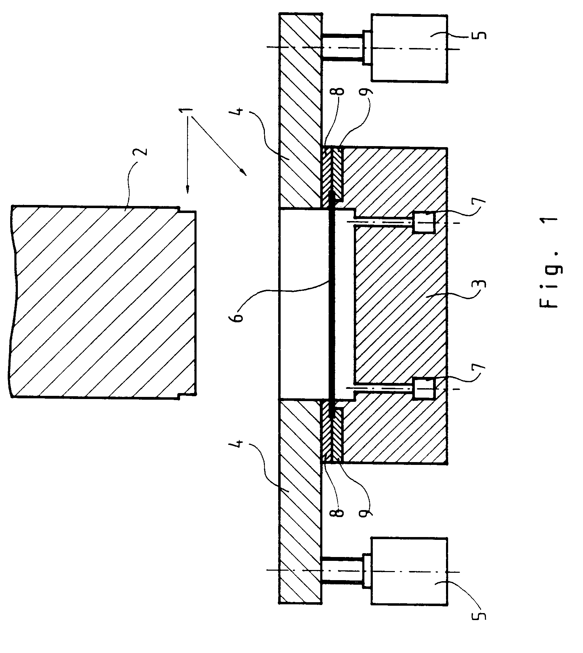

In fig.1, a molding apparatus (1) is shown, comprising a male mold (2) and a female mold (3). The male mold (2) is only partly shown. Means for closing the mold and pressurizing are not shown. The female mold (3) further has a clamping piece (4) attached to it, which is controlled by pressure cylinders (5). The foil (6) is clamped between two layers of low friction material (8 and 9) that form the surfaces of the clamping piece (4) and the female mold (3) respectively. The female mold (3) contains holes, which are connected to a vacuum system (7).
The clamping piece (4) exerts a pressure on foil (6), high enough to allow the foil to be deep-drawn without folding or creasing and low enough to prevent the foil from breaking during the forthcoming steps.

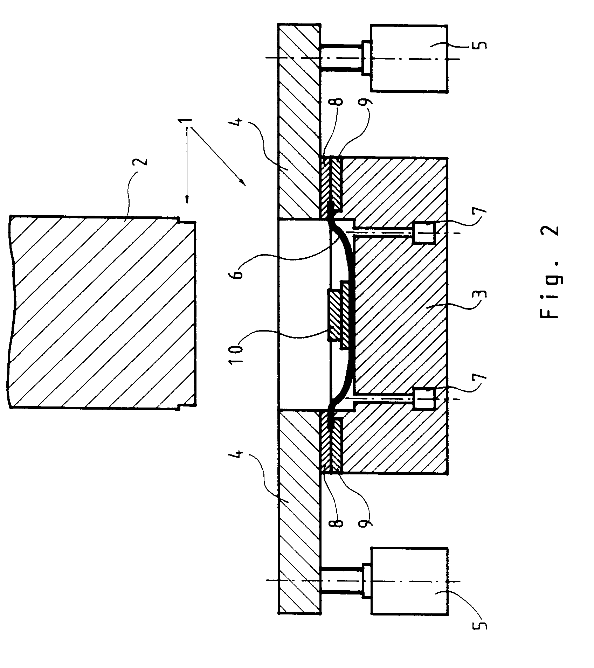

In fig. 2 the molding apparatus is shown, after the vacuum is applied. The foil (6) is deep-drawn and has partially taken the shape of the female mold (3). The foil (6) has partially moved from between the two layers of low friction material (8 and 9) into female mold (3). An amount of thermosettable compound (10) is introduced on top of the foil.

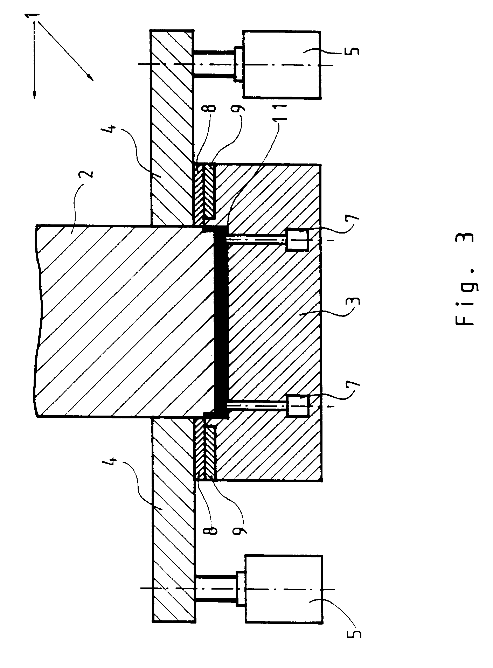

In fig. 3 the molding apparatus of fig. 2 is closed and pressure is exerted. The means for closing and exerting pressure are not shown. Hereby the foil (6) has now taken the exact shape of the female mold (3) and the thermosettable compound (10) is occupying the space between foil (6) and male mold (2). The female and male molds are supplied with a heating means (not shown) that provide heat whereby the thermosettable compound (10) is cured. The formed part (11) is indicated in black in fig. 3.

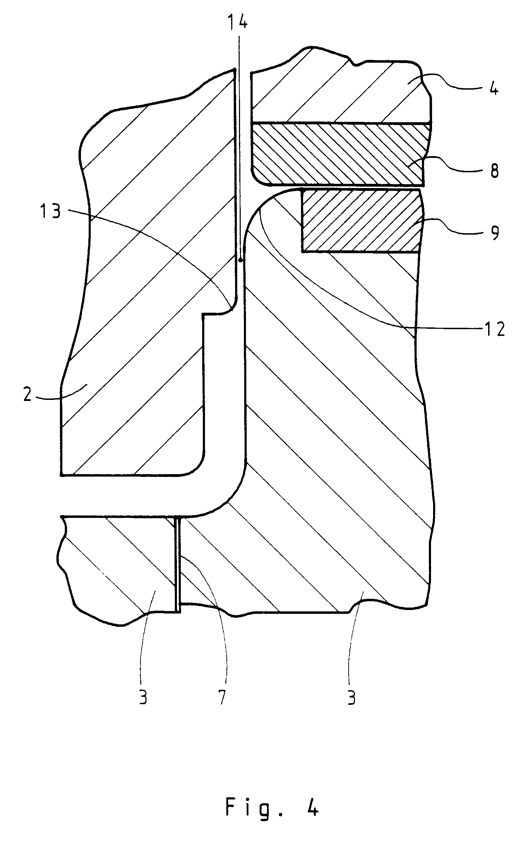

In fig. 4 one of the closing edges of the mold in fig. 3 is given partially and on an enlarged scale. The foil (not shown) is clamped between the two layers of low friction material (8) and (9). The edge (12) of the female mold (3) and the edge (13) of the male mold (2) are curved so that the metal foil (not shown) can be deep-drawn into the mold without being torn. The width of the closest gap (14) between edges (12) and (13) is approximately as large as the thickness of the foil. This will prevent the thermosettable compound (not shown) from squeezing out of the mold.

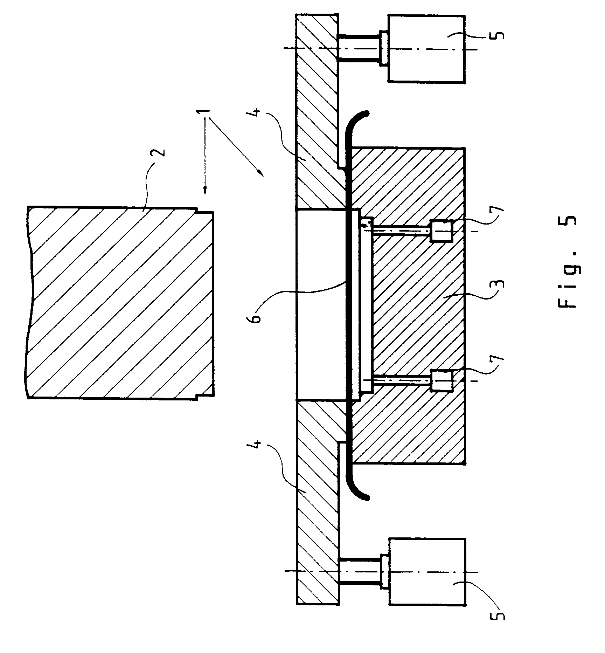

In fig. 5 a second embodiment of a molding apparatus for a process according to the invention is given, comprising a male mold (2) and a female mold (3). The female mold (3) further has a clamping piece (4) attached to it, which is controlled by pressure cylinders (5). The clamping surfaces are made of the same material as the parts (3) and (4), or can optionally be of a different material. The foil (6) is clamped between the clamping piece (4) and the female mold (3). The female mold (3) contains holes, which are connected to a vacuum system (7).

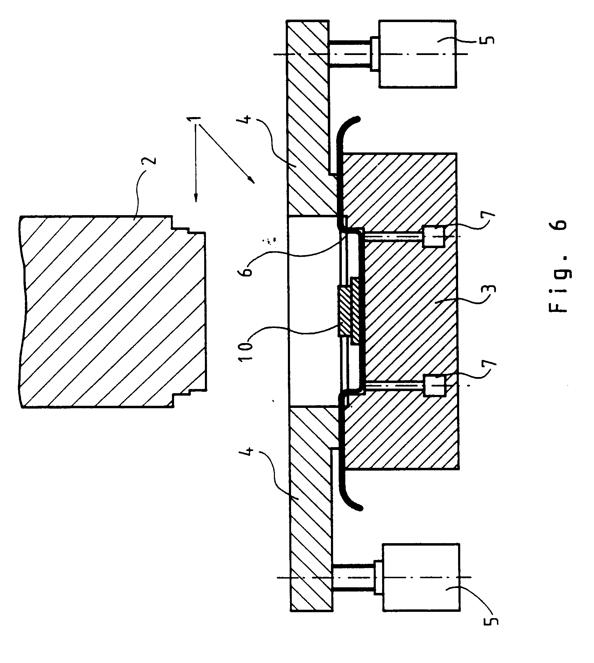

In fig. 6 the molding apparatus of fig. 5 is shown after the vacuum is applied. The foil (6) is deep-drawn and has substantially taken the shape of the female mold (3). An amount of thermosettable compound (10) is introduced on top of the foil (6).

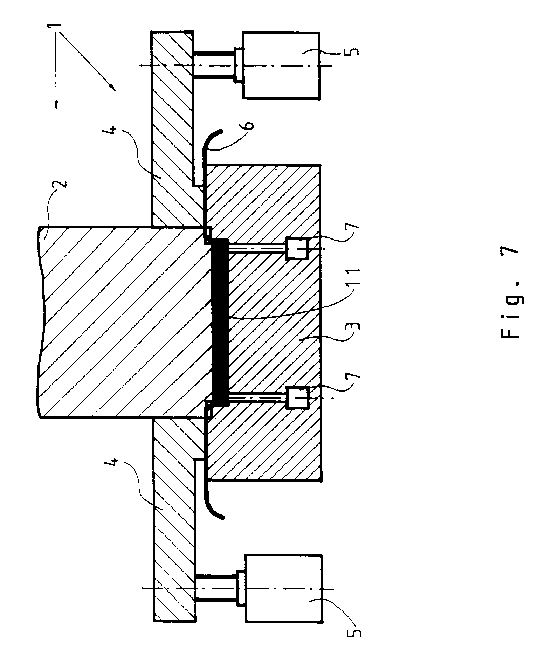

In fig. 7 the molding apparatus of fig. 6 is closed and pressure is exerted on the compound. The foil (6) now takes the exact shape of the female mold (3). The thermosettable compound (10) fills the space between foil (6) and male mold (2). The compound (10) is cured using a heating device (not shown). The formed part (11), comprising the foil (6) and the cured compound (10), is indicated in black.

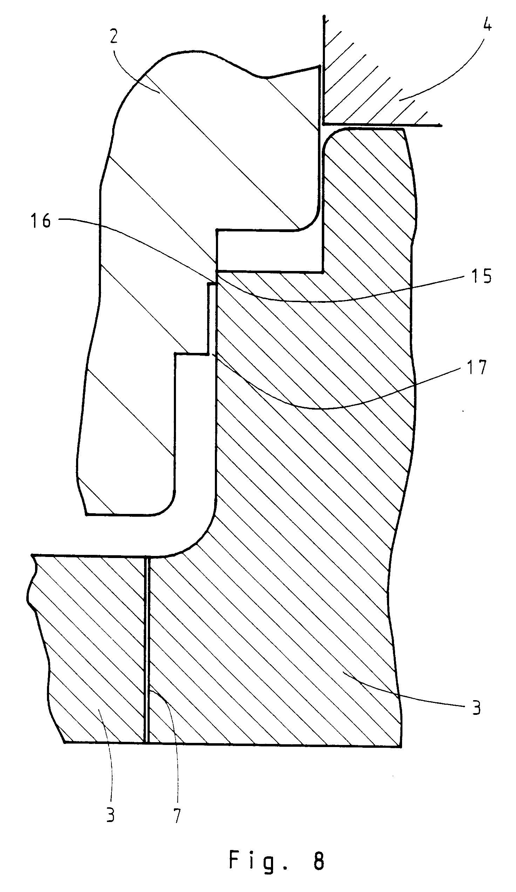

In fig. 8 a sectional view of one of the closing edges of fig. 7 is shown partially and on an enlarged scale. The foil (not shown) is clamped between the clamping piece (4) and the female mold (3). The edge (15) of the female mold (3) and the edge (16) of the male mold (2) are sharp and are designed such that they together form a cutting device for the foil. By closing the mold the foil is cut. The gap (17) below the cutting point 14-15 has a width corresponding with the thickness of the foil. The mold (1) can also be designed without this gap (17). The foil that extends into the gap (18) will prevent the thermosettable compound (not shown) from flowing around it to the outer surface of the part and is therefore a preferred embodiment. If the mold (1) is produced without the gap (17), the molded part (11) will be produced without an extending part of the foil (6).

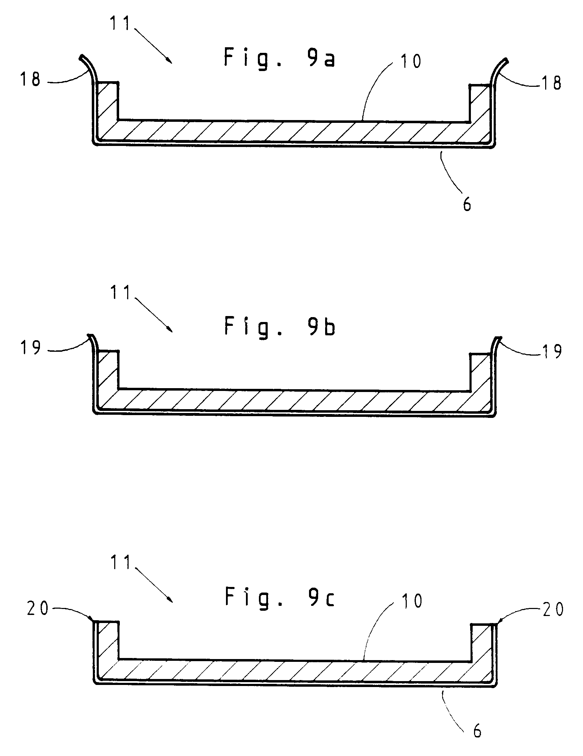

In fig. 9 a, b and c sectional views on an enlarged scale are given of some of the molded parts that can be produced with a mold according to the above figures.

Fig. 9a shows a molded part (11) comprising a foil (6) and a cured thermosettable compound (10) produced in a mold as described in figures 1-3. A piece (18) of foil (6) will extend from the edges of part (11) and will have to be removed.

Fig. 9b shows a molded part (11) produced in a mold as described in figures 5-7. A relatively small piece (19) of foil (6) will extend from the edges of part (11) and may have to be removed.

Fig. 9c shows a finished molded part (11) produced by removing piece (18) from foil (6) in fig. 9a or produced by removing piece (19) from foil (6) in fig. 9b. Edge (20) of piece (11) in fig. 9c is clear cut and does not show any extending pieces. The molded part (11) of fig. 9c can also be produced directly with a mold (1) with the modification as described under fig. 8.

From the above description of the figures it can be concluded that some of the differences between the process of the invention and the process described in EP-B-0,186,015 are that a vacuum is applied, a thermosettable compound is used, heat is supplied, and the pressure used to close the mold is probably much higher than the pressure used to close molds with thermoplastic compounds as in EP-B-0,186,015.

The present invention will be illustrated with reference to the following examples, without being restricted thereto.

The SMC used was an unsaturated polyester SMC (Trademark Shimoco LP 350 neutral 99^{r}) and was obtained from DSM Resins, Como, Italy or an unsaturated polyester SMC (Trademark C133^{R}) obtained from BWR, Rastatt. Germany. Both SMC's contained, inter alia, anti-shrink agent (low profile additive), calcium carbonate filler and around 25% by weight glass fibers. The tensile strengths were measured in accordance with ASTM D3167-76.

### Example I

### Laminates with Sheet Moulding Compound and Aluminum Foil

The apparatus used was similar to that described in the embodiment as show in fig. 1-3.
Circular pieces of Al foil ("Al blanks") with and without an adhesive layer were clamped between the clamping device (4) and the female mold (3). The pressure on the cylinders was varied to give between 0.3 and 0.8 N/mm² pressure on the clamped part of the Al foil. The vacuum was applied and the Al foil was partially deep-drawn. The edge of Al foil was observed to move inwards towards the centre of the mold. If too high a clamping pressure was used then the vacuum forming did not occur and the foil broke in the subsequent pressing step. If the clamping pressure was too low then the foil came out of the clamping piece and became creased and unusable.

Once the vacuum-forming had taken place, carefully weighed out pieces of SMC (C133^{R} ex BWR, Rastatt, D) were laid on top of the foil. The mold was then closed with a maximum closing speed of 5 mm/s. The pressure applied was around 150 bar. The curing temperature used was 150°C. The pressure was applied for about 3 min to effect the cure of the SMC. Sometimes longer times of about 15 min were required to adhere certain adhesives to the SMC (see Example VI).

If the press was closed at a speed higher than 5 mm/s the foil tore during the process, leading to an imperfect laminate.

At the end of this process the laminate was removed from the mold and the edge of excess Al foil was cut off. The surface of the laminate was smooth and free of defects and blisters.

If no adhesive layer was applied to the Al foil it was possible to remove the foil from the SMC by hand. If an adhesive layer was applied to the Al foil than the foil could not be removed without exerting a stronger force.

### Example II

### Laminates with thermoplastic foil and SMC

In these experiments a mould was used similar to that shown in fig. 5-7. The foils used were
- Nylon 6
- Nylon with an adhesive layer
They had thicknesses from 100-200 microns.

The same SMC was used as in example I.

The foils were firmly clamped by the clamping mechanism around the mold. They were briefly prewarmed by the heat from the mold. The vacuum was applied and the foils were deep-drawn to substantially take the shape of the female mold. The SMC was laid in the female mold on top of the foil and then the press was closed. The press conditions were as in example I. The foil was cut by the mold during the pressing. After pressing both the formed laminate and the excess foil were removed from the mold.

The surfaces of the laminates were again smooth and free of defects and blisters. It was only possible to simply separate the foil and SMC for the sample which comprised the nylon foil without adhesive. For the remaining samples with adhesive it was more difficult to remove the foil from the SMC.

### Example III

### Laminate with Melamine Formaldehyde Compound (MFC) and Thermoplastic Foil

Example II was repeated but MFC was now used instead of SMC. The MFC was made in house and contained the following ingredients:

| | |
|---|---|
| - glass fibres | 25% |
| - Melamine Formaldehyde Resin (Formaldehyde/Melamine Ratio 1.7) | 35% |
| - Aluminum Trihydroxide | 35% |
| - Paratoluene sulfonic acid (Catalyst) | 1% |
| - PAT 523 (ex Acmos) (Release agent) | 1% |
| - Water | 3% |
| Total | 100% by wt. |

Again the foil was found to give a smooth surface to the laminate body, that was free of defects and blisters and the adhesion between the foil and the MFC was good if an adhesive was present.

### Comparative Experiment A

The experiment of example I was repeated in a mold without holes for the vacuum. The mold was closed at several different speeds.
In each case the surface of the part produced showed defects such as wrinkels and the metal foil was usually ruptured.

### Comparative Experiment B

The experiment of example II was repeated in a mould without holes for the vacuum. The mold was closed at several different speeds. The thermoplastic surface of the parts produced showed unevenesses and the foils sometimes ruptured.

The following examples will show the adhesion strength of laminated products produced with a process according to the invention. For sake of simplicity the samples are pressed between a flat press instead of with a deep-drawing according to the invention.

### Example IV

### Laminated body having an adhesive layer based on PE

A laminated body was produced by placing a polyethylene-based thermoplastic (TP) film (Trademark Plexar^{r}, DSM Polymers International, Sittard, The Netherlands) on a sheet of SMC weighing about 50 grams. A 75 µm thick aluminum foil was laid on top of this and then pressing was conducted with a pressure of 180 bar using various press times and various press temperatures. All sheets, films and foils had been cut beforehand to the dimensions of the mold (5 x 22 cm).

The result was a laminated body having a good adhesion between the metal layer and the SMC layer.

Tensile tests were performed on the laminated body for the two adhesions (TP film/Al and TP film/SMC) as a function of the press temperature. The results are given in Table 1. In this table the average tensile strength is given because there was no clearly detectable difference between the tensile strength for TP film/SMC and that for TP film/Al.

**TABLE 1**

| average tensile strength (N/mm) for TP foil/SMC and TP film/Al | | | | |
|---|---|---|---|---|
| press time (minutes) | press temperature (°C) | | | |
| | 120 | 140 | 160 | 180 |
| 15 | 0.35 | 1.83 | 2.22 | 1.45 |
| 30 | 0.63 | 1.93 | 2.57 | 2.02 |

From the measurements, the conclusion can be drawn that the tensile strength is greatest in the case of a laminated body pressed at a temperature of about 160°C for 30 minutes.

### Example V

### Laminated body having an adhesive layer based on EVA

A laminated body was produced by laying a polyethylene/vinyl acetate (EVA)-based film as an adhesive layer (Trademark Plexar^{r}, DSM Polymers International, Sittard, The Netherlands) on a SMC sheet weighing 50 grams. A 75 µm thick aluminum foil was laid on top of this and then pressing was effected under a pressure of 162 bar for 300 s at various temperatures. All sheets, TP films and foils had been cut beforehand to the dimensions of the mold (5 x 22 cm).

The result was a laminated body having a good adhesion between the metal layer and the SMC layer.

Tensile tests were performed on the laminated body. The tensile strength for the two adhesions (TP film/Al and TP film/SMC) is shown as a function of the press temperature in Table 2.

**TABLE 2**

| tensile strength (N/mm) | | | | |
|---|---|---|---|---|
| | press temperature (°C) | | | |
| | 120 | 140 | 160 | 180 |
| TP film/SMC | 1.01 | 3.59 | 3.74 | 1.84 |
| TP foil/Al | 0.49 | 1.25 | 2.15 | 1.60 |

In Example V the adhesion between the TP film and the SMC is greater than that between the TP film and aluminum. The adhesion is greatest in the case of the material which was pressed at 160°C.

### Example VI

### Influence of the press time

The method of Example V was followed, the laminate being pressed for 30 min at a temperature of 105°C. The tensile strength for TP film/SMC was 3.28 and for TP film/Al it was 1.41 N/mm.

The surface appeared somewhat smoother than the surface of the laminated body in Example V. It can be concluded that the surface quality and the adhesion increase with increasing press time.

### Example VII

### Laminated body without adhesive layer

A laminated body was produced by laying a) a 10 µm thick and b) a 75 µm thick aluminum foil on a SMC sheet weighing 50 gram and pressing under a pressure of 162 bar using a press time of 240 seconds at temperatures of 130-200°C.

The resulting laminate had a smooth surface.
Tensile tests were carried out on the laminate. The adhesion (Al/SMC) was rather low and both in the case of a) and of b) the aluminum could be pulled away from the SMC. The thin foil from experiment a) tore in this test. The thicker foil of experiment b) remained intact.

### Example VIII

### Simulation of a paint line

A laminated body was produced as described in Example IV. The laminate was pressed at 160°C. After cooling, the laminate was heated again to 180°C for 30 minutes in order to simulate the conditions of a paint line. The resulting laminate had a smooth surface without blisters, which signifies that the laminate can be used in a paint line.

## Claims

1. A process for forming a laminated body, by introducing a foil into a mold, clamping the edges of said foil between a clamping device and part of the mold, introducing a compound into the mold, deep-draw said foil fully or partly with vacuum before, during or after the compound is introduced and before the mold is completely closed, and closing said mold, characterized in that the mold is heated, said clamping device exerting a pressure on the foil high enough to deep-draw said foil without folding or creasing and low enough to prevent the foil from breaking during moulding, whereby the clamping device at least partially is provided with a low friction material, and whereby said laminated body is formed by flow of the compound, being thermosettable and said compound is cured.

2. Process according to claim 1, characterized in that, the foil is a thermoplastic foil.

3. Process according to claim 1, characterized in that, the foil is a metal foil.

4. Process according to claim 2, characterized in that the foil is a thermoplastic foil with a melting point of at least 120°C.

5. Process according to claim 2, characterized in that the foil is a thermoplastic foil with a melting point of at least 180°C.

6. Process according to any one of claims 1- 5, characterized in that the foil comprises an adhesive layer.

7. Process according to claim 6, characterized in that the adhesive layer is applied to the foil before or after entering of the foil into the mold and is applied by way of spreading, spraying or extrusion in the form of a liquid, a paste or a powder.

8. Process according to any one of claims 6-7, characterized in that the adhesive layer comprises a compound comprising a reactive group chosen from acid groups, anhydride groups, epoxy and hydroxy groups.

9. Process according to any one of the claims 1-8, characterized in that the thermosettable compound is a sheet molding compound or a melamine formaldehyde compound.

10. Process according to any one of claims 1-9, characterized in that the compound is cured under a pressure of 1 to 250 bar at a temperature of 40-200°C.

11. Process according to claim 10, characterized in that the compound is cured under a pressure of 100 to 200 bar at a temperature of 130 to 160°C.

12. Product with a thickness of from 1.5 to 10 mm, obtained by a process for forming a laminated body, by introducing a foil into a mold, clamping the edges of said foil between a clamping device and part of the mold, introducing a compound into the mold, deep-draw said foil fully or partly with vacuum before, during or after the compound is introduced and before the mold is completely closed, and closing said mold, whereby the mold is heated and said clamping device exerts a pressure on the foil high enough to deep-draw said foil without folding or creasing and low enough to prevent the foil from breaking during moulding, whereby the clamping device at least partially is provided with a low friction material, and whereby said laminated body is formed by flow of the compound, being thermosettable and said compound is cured.

13. A mold for producing laminated molded parts comprising a foil and a thermosettable compound, said mold comprising a male mold, a female mold, and clamping means that can be used to clamp the foil to the female mold, which clamping means at least partially are provided with a low friction material, wherein said mold further comprises heating means and one or more holes in the female mold that can be connected to a vacuum system.

## Patentansprüche

1. Verfahren zur Herstellung eines Schichtkörpers durch Einbringung einer Folie in ein Formwerkzeug, Einspannen der Ränder dieser Folie zwischen einer Klemmvorrichtung und einem Teil des Formwerkzeugs, Einführung einer Verbindung in das Formwerkzeug, Tiefziehen der Folie vollständig oder teilweise mit Vakuum bevor, während oder nachdem die Verbindung eingebracht wurde und bevor das Formwerkzeug vollständig geschlossen wird, und Schließen des Formwerkzeugs, dadurch gekennzeichnet, daß das Formwerkzeug erhitzt wird, die Klemmvorrichtung auf die Folie einen Druck ausübt, der hoch genug ist, um die Folie tiefzuziehen ohne Faltung oder Kräuselung, und niedrig genug ist, um die Folie vor Zerbrechen während der Verformung zu bewahren, wobei die Klemmvorrichtung mindestens teilweise mit einem Material geringer Reibung versehen ist, und wobei der Schichtkörper durch Verfließen der Verbindung, die hitzehärtbar ist, gebildet wird, und daß die Verbindung gehärtet wird.

2. Verfahren nach Anspruch 1, dadurch gekennzeichnet, daß die Folie eine thermoplastische Folie ist.

3. Verfahren nach Anspruch 1, dadurch gekennzeichnet, daß die Folie eine Metallfolie ist.

4. Verfahren nach Anspruch 2, dadurch gekennzeichnet, daß die Folie eine thermoplastische Folie mit einem Schmelzpunkt von mindestens 120°C ist.

5. Verfahren nach Anspruch 2, dadurch gekennzeichnet, daß die Folie eine thermoplastische Folie mit einem Schmelzpunkt von mindestens 180°C ist.

6. Verfahren nach einem der Ansprüche 1 bis 5, dadurch gekennzeichnet, daß die Folie eine Haftschicht aufweist.

7. Verfahren nach Anspruch 6, dadurch gekennzeichnet, daß die Haftschicht auf die Folie aufgebracht wird, bevor oder nachdem die Folie in das Formwerkzeug eintritt, und mit Hilfe von Bestreichen, Sprühen oder Extrudieren in Form einer Flüssigkeit, einer Paste oder eines Pulvers aufgebracht wird.

8. Verfahren nach einem der Ansprüche 6 bis 7, dadurch gekennzeichnet, daß die Haftschicht eine Verbindung umfaßt, die eine reaktive Gruppe, ausgewählt aus Säuregruppen, Anhydridgruppen, Epoxy- und Hydroxygruppen, aufweist.

9. Verfahren nach einem der Ansprüche 1 bis 8, dadurch gekennzeichnet, daß die hitzehärtbare Verbindung eine Bahnformverbindung oder eine Melamin-Formaldehyd-Verbindung ist.

10. Verfahren nach einem der Ansprüche 1 bis 9, dadurch gekennzeichnet, daß die Verbindung unter einem Druck von 1 bis 250 bar bei einer Temperatur von 40 bis 200°C gehärtet wird.

11. Verfahren nach Anspruch 10, dadurch gekennzeichnet, daß die Verbindung unter einem Druck von 100 bis 200 bar bei einer Temperatur von 130 bis 160°C gehärtet wird.

12. Produkt mit einer Dicke von 1,5 bis 10 mm, erhalten nach einem Verfahren zur Herstellung eines Schichtkörpers durch Einbringung einer Folie in ein Formwerkzeug, Einspannen der Ränder dieser Folie zwischen einer Klemmvorrichtung und einem Teil des Formwerkzeugs, Einführung einer Verbindung in das Formwerkzeug, Tiefziehen der Folie vollständig oder teilweise mit Vakuum bevor, während oder nachdem die Verbindung eingebracht wurde und bevor das Formwerkzeug verschlossen wird, und Schließen des Formwerkzeugs, wobei das Formwerkzeug erhitzt wird, die Klemmvorrichtung auf die Folie einen Druck ausübt, der hoch genug ist, um die Folie tiefzuziehen ohne Faltung oder Kräuselung, und niedrig genug ist, um die Folie vor Zerbrechen während der Verformung zu bewahren, wobei die Klemmvorrichtung mindestens teilweise mit einem Material geringer Reibung versehen ist und wobei der Schichtkörper durch Verfließen der Verbindung, die hitzehärtbar ist, gebildet wird, und wobei die Verbindung gehärtet wird.

13. Formwerkzeug zur Herstellung geformter Schichtkörperteile mit einer Folie und einer hitzehärtbaren Verbindung, wobei das Formwerkzeug eine Positivform, eine Negativform und eine Klemmvorrichtung umfaßt, die verwendbar ist zum Festklemmen der Folie an die Negativform, wobei die Klemmvorrichtung mindestens teilweise mit einem Material geringer Reibung versehen ist, und wobei das Formwerkzeug ferner Heizeinrichtungen und eines oder mehrere Löcher in der Negativform, die an ein Vakuumsystem angeschlossen werden können, aufweist.

## Revendications

1. Procédé de formage d'un corps stratifié, en introduisant une feuille dans un moule, en pinçant les bords de ladite feuille entre un dispositif de pincement et une partie du moule, en introduisant une composition dans le moule, on emboutit ladite feuille totalement ou partiellement avec le vide, avant, pendant ou après l'introduction de la composition et avant que le moule soit complètement fermé, et on ferme ledit moule, caractérisé en ce que le moule est chauffé, ledit dispositif de pincement exerce une pression sur feuille suffisamment élevée pour emboutir ladite feuille sans former de pli ni de froissement et suffisamment faible pour empêcher la rupture de la feuille pendant le moulage, le dispositif de pincement est muni au moins partiellement d'un matériau à faible frottement, et ainsi ledit corps stratifié est formé par écoulement de la composition qui est thermodurcissable, et on durcit ladite composition.

2. Procédé selon la revendication 1, caractérisé en ce que la feuille est une feuille thermoplastique.

3. Procédé selon la revendication 1, caractérisé en ce que la feuille est une feuille métallique.

4. Procédé selon la revendication 2, caractérisé en ce que la feuille est une feuille thermoplastique ayant un point de fusion d'au moins 120°C.

5. Procédé selon la revendication 2, caractérisé en ce que la feuille est une feuille thermoplastique ayant un point de fusion d'au moins 180°C.

6. Procédé selon l'une quelconque des revendications 1 - 5, caractérisé en ce que la feuille comprend une couche adhésive.

7. Procédé selon la revendication 6, caractérisé en ce qu'on applique la couche adhésive sur la feuille avant ou après l'introduction de la feuille dans le moule, et on l'applique au moyen de l'étalement, de la pulvérisation ou de l'extrusion, sous forme d'un liquide, d'une pâte ou d'une poudre.

8. Procédé selon l'une quelconque des revendications 6 - 7, caractérisé en ce que la couche adhésive comprend un composé contenant un groupe réactif choisi parmi les groupes acide, les groupes anhydride, les groupes époxy et hydroxy.

9. Procédé selon l'une quelconque des revendications 1 - 8, caractérisé en ce que le composé thermodurcissable est un composé de moulage en feuille ou une composition mélamine - formaldéhyde.

10. Procédé selon l'une quelconque des revendications 1 - 9, caractérisé en ce qu'on durcit la composition sous une pression de 1 à 250 bar, à une température de 40 - 200°C.

11. Procédé selon la revendication 10, caractérisé en ce qu'on durcit la composition sous une pression de 100 à 200 bar, à une température de 130 à 160°C.

12. Produit ayant une épaisseur de 1,5 à 10 mm, obtenu par un procédé de formage d'un corps stratifié, en introduisant une feuille dans un moule, en pinçant les bords de ladite feuille entre un dispositif de pincement et une partie du moule, en introduisant une composition dans le moule, on emboutit ladite feuille totalement ou partiellement avec le vide, avant, pendant ou après l'introduction de la composition et avant que le moule soit complètement fermé, et on ferme ledit moule, où on chauffe le moule, ledit dispositif de pincement exerce une pression sur feuille suffisamment élevée pour emboutir ladite feuille sans former de pli ni de froissement et suffisamment faible pour empêcher la rupture de la feuille pendant le moulage, le dispositif de pincement est muni au moins partiellement d'un matériau à faible frottement, et ainsi ledit corps stratifié est formé par écoulement de la composition qui est thermodurcissable, et on durcit ladite composition.

13. Moule pour produire des pièces moulées stratifiées comprenant une feuille et une composition thermodurcissable, ledit moule comprenant une empreinte mâle, une empreinte femelle, et des moyens de pincement que l'on peut utiliser pour pincer la feuille dans le moule femelle, ces moyens de pincement sont munis au moins partiellement d'un matériau à faible frottement, où ledit moule comprend en outre des moyens de chauffage et un ou plusieurs trous dans le moule femelle que l'on peut relier à un système de vide.
